# EUROPEAN PATENT APPLICATION

(11) **EP 3 299 154 A1**
(43) Date of publication of application: **28.03.2018**
(21) Application number: 16190902.3
(22) Date of filing: 27.09.2016
(51) Int. Cl.: B29C 70/44

(54) **DEVICE FOR MANUFACTURING A COMPOSITE PART**

(71) Applicant: Hexcel Reinforcements SAS, 01120 Dagneux (FR)
(72) Inventor: PERRILLAT-COLLOMB, Pascal, 01121 Dagneux (FR); VIGUIE, Damien, 01121 Dagneux (FR)
(74) Representative: Pols, Ronald Maarten

(57) **Abstract**

There is provided a device for producing fibre-reinforced composite components from dry fibre components by means of an injection process for injecting curable matrix material, comprising
a. a tool (3) for arranging a dry fibre component (5);
b. an envelope which is impermeable to gas and curable matrix material arranged on at least one side of the tool (3) to form a space (11) into which curable matrix material may be introduced to contact a dry fibre component (5) arranged on the tool (3), the envelope sealing off the tool (3) from the environment;
c. an inlet (15) for introducing curable matrix material into the space (11) formed by the envelope;
d. an outlet (27) for removing gas from the space (11) formed by the envelope so that curable matrix material may be drawn into the space (11) to penetrate the dry fibre component (5) arranged on the tool (3);
and
e. a patch (29) formed from a membrane which is permeable to gas but impermeable to curable matrix material, the patch (29) being associated with the outlet (27) so that gas, but not curable matrix material, can be removed from the space (11) formed by the envelope via the outlet (27);
wherein the association between the outlet (27) and the patch is stable at temperatures of at least 150[deg.]C.There is further provided a method for producing fibre-reinforced composite components by use of a device according to the invention.

## Description

### INTRODUCTION

The present invention relates to devices for producing fibre-reinforced components from dry fibre components by means of the injection of curable matrix materials, and particularly devices employing patches formed from membranes that are permeable to gas but impermeable to matrix materials, and which are suitable for use at elevated temperatures to allow high temperature curing of the components. The present invention also relates to methods for producing fibre-reinforced composite components using such devices.

### BACKGROUND

Composite materials are widely used in aerospace applications because of their relatively light weight and favourable physical properties. One such category of composites used in aircraft manufacture is the prepreg. Prepreg is short for 'pre-impregnated', which refers to a fibrous reinforcement, typically a carbon fibre fabric, which is combined with a matrix material such as an epoxy resin, to form an impregnated fibre fabric which upon its use is laid up in a mould and cured to form a composite part.

Prepreg production of aircraft parts typically necessitates the lay-up to be cured in an autoclave. The high pressure difference of the autoclave reduces the extent of porosity in the final cured part. This is necessary because pores in a composite can act as stress concentrators and are initiation sites for crack propagation. However, autoclaves are expensive, and also introduce size constraints into part production. Therefore, there is a preference to produce some aeroplane parts using resin transfer moulding (RTM) or a similar resin infusion process. In such processes a dry fibre preform is used in place of the prepreg, and a liquid resin is infused into a closed mould to completely wet out the dry fibre preform before curing. Infusion allows low porosity composite structures to be produced without the need for an autoclave. Alternatively, autoclave and RTM processes can be combined, with the infusion step carried out via RTM and the curing completed in an autoclave.

Many forms of resin transfer moulding have been developed, and a number of these are based on the enclosure of a dry fibre component in a sealed gas and resin impervious envelope, or vacuum bag, to isolate the component from the environment, followed by the creation of reduced pressure in the envelope leading to an inflow of matrix material to infuse into the dry fibre component. Such methods can also be combined with curing of the matrix material without removal of the infused component from the envelope. One such particular method is known as vacuum assisted processing (VAP), which utilises an additional membrane between the dry fibre component and the outer envelope that allows the passage of air but prevent the passage of resin materials, to provide efficient control of resin impregnation into the dry fibres and good control of gas flow/vacuum.

US 6,843,953 discloses a VAP process in which a gas permeable but matrix material impermeable membrane is used to surround at least a first surface of a dry fibre composite preform.

The gas permeable but matrix material impermeable membranes used in conventional VAP processes are expensive and their use may complicate the preparation of systems for the infusion of dry fibre components. One way to deal with such problems is to reduce the size of these membranes, but difficulties may arise in the incorporation of smaller areas of such membranes into a VAP device, as this will generally require the membrane to be sealed to one or more other components of the device to provide the required gas flow properties, or for the reduced size membrane to be sealed to itself to form a component within the device; and such sealing may be difficult to maintain under preferred operating conditions. In particular, when curing composite parts for use in aerospace applications it is often advantageous to carry out the curing at relatively high temperatures, particularly temperatures of at least 180°C, and the incorporation of gas permeable but matrix material impermeable membranes as components sealed to themselves or other components in an apparatus to be used at such temperatures is problematic.

The present invention aims to overcome the above described problems and/or to provide improvements generally.

### SUMMARY

According to the present invention, there is provided a device for producing fibre-reinforced composite components by means of an injection process for injecting curable matrix material, and a method for producing fibre-reinforced composite components by use of such a device as defined in any of the accompanying claims.

According to the present invention, there is provided a device for producing fibre-reinforced composite components from dry fibre components by means of an injection process for injecting curable matrix material, comprising
a. a tool for arranging a dry fibre component;
b. an envelope which is impermeable to gas and curable matrix material arranged on at least one side of the tool to form a space into which curable matrix material may be introduced to contact a dry fibre component arranged on the tool, the envelope sealing off the tool from the environment;
c. an inlet for introducing curable matrix material into the space formed by the envelope;
d. an outlet for removing gas from the space formed by the envelope so that curable matrix material may be drawn into the space to penetrate the dry fibre component arranged on the tool; and
e. a patch formed from a membrane which is permeable to gas but impermeable to curable matrix material, the patch being associated with the outlet so that gas, but not curable matrix material, can be removed from the space formed by the envelope via the outlet; wherein the association between the outlet and the patch is stable at temperatures of at least 150°C.

According to the present invention there is also provided a method for producing fibre-reinforced composite components by use of a device according to the present invention, comprising
a. arranging a dry fibre component on the tool of the device;
b. arranging the envelope of the device to isolate the tool and the dry fibre component from the environment and to form a space into which curable matrix material may be introduced to contact the dry fibre component;
c. attaching the inlet of the device to a source of curable matrix material; and
d. applying vacuum to the outlet of the device, so that gas is removed from the space formed by the envelope and curable matrix material is drawn into the space and penetrates the dry fibre component, but so that curable matrix material is not removed from the space.

### SPECIFIC DESCRIPTION

The devices of the present invention comprise an envelope which is impermeable to gas and matrix material, and which is arranged to form a space into which curable matrix material may be introduced in order to penetrate a dry fibre component arranged on the tool also present within the space. The envelope is also arranged to seal off the tool, and the other components of the device, from the surrounding environment, so that, for example, the pressure within the space may be reduced with respect to the surrounding environment. The envelope may be formed from any suitable material, such as materials used to form conventional vacuum foils or vacuum bags for use in RTM processes and other resin infusion systems. The size of the envelope is not critical, so long as it is sufficiently large to contain the tool and the dry fibre component to be infused, plus any other components of the device, but not so large as to be difficult to handle or wasteful of material. Those skilled in the art will know how to select suitable envelope materials and sizes to optimise infusion efficiency and costs.

The envelope may be arranged to fully enclose the tool and all other components of the device, or it may be attached to the tool so that the surface of the tool on which the dry fibre component may be arranged, and all of the other components of the device, are enclosed by the envelope

The devices of the present invention also comprise a patch formed from a membrane which is permeable to gas but impermeable to curable matrix material. By a patch, it is meant that the size of the membrane is relatively small, as compared to the full size membranes used in conventional VAP processes, such as those disclosed in US6,843,953. In particular, the patch used in a device according to the present invention should be significantly smaller than the envelope used in the same device. Preferably the total area of the membrane forming the patch should be less than 50% of the total area of the envelope, more preferably less than 20%, and most preferably less than 10%.

The only limit to the minimum size of the membrane is that it should be sufficiently large to permit removal of gas from the device in which it is used. In practice, the total area of the membrane forming a patch is preferably at least 1% of the area of the envelope, for example at least 5%.

In some embodiments of the present invention, a device according to the invention may comprise more than one patch, such as 2, 3, 4, 5, or more, patches; for example if more than one outlet is present. In this case, the total area of the patches should correspond to the areas specified for a single patch, i.e. the preferred total area of the membrane forming the multiple patches should be less than 50% of the total area of the envelope, more preferably less than 20%, and most preferably less than 10%; and the combined area of the membrane forming the multiple patches should not be less than 1% of the area of the envelope.

By limiting the size of the membrane which is permeable to gas but impermeable to curable matrix material in the devices of the present invention, the cost of the devices can be reduced whilst the advantages of the use of such materials are still obtained. In addition, the process of using the devices of the invention, particularly the preparation or laying up the devices, may be simplified, for example because the number of components may be reduced and/or the materials forming the devices may be easier to handle.

The membranes forming the patches used in the devices of the present invention may comprise any membrane materials that are permeable to gas but impermeable to curable matrix materials. Suitable materials include stretched PTFE membranes, Gore-Tex@ type materials and VAP membranes available from Trans-Textil GmbH and Composyst GmbH.

The devices of the present invention further comprise a tool for arranging a dry fibre component, and this may include any suitable part or arrangement of parts, such as a simple support, or a mould for shaping the dry fibre component during use of the device. The tool may be formed from any suitable material including cork, polymer, rubber, polymer foam, wood or metal, or may be a fluid filled object, such as a bladder filled with air or liquid. The tool may also comprise additional components for shaping the dry fibre component during use thereof.

The devices of the present invention further comprise an inlet for introducing curable matrix material into the space formed by the envelope. The inlet may be in any suitable arrangement and, in use, may be connected to a source of curable matrix material. Multiple inlets may be present in a single device.

The devices of the present invention further comprise an outlet for removing gas from the space formed by the envelope so that curable matrix material may be drawn into the space to penetrate the dry fibre component arranged on the tool. The outlet may be connectable to a vacuum source. Any suitable outlet components may be used, but the outlet must also be associated with the patch formed from a membrane which is permeable to gas but impermeable to curable matrix material, so that gas but not curable matrix material can be removed from the space formed by the envelope via the outlet, and the association between the outlet and the patch must be stable at temperatures of at least 150°C, preferably at least 180°C. In particular embodiments of the present invention, the devices according to the invention may comprise multiple outlets, but each outlet must be associated with a patch, as described above, and the association must be stable at temperatures of at least 150°C, preferably at least 180°C.

By associated it is meant that the outlet and the patch are arranged so that when vacuum is applied to the outlet, gas present in the space formed by the envelope is pulled towards the outlet, but must pass through the patch in order to be removed from the space. This arrangement means that curable matrix material present in the space is also subject to the suction provided by the outlet when it is connected to a vacuum source, but that the curable matrix material is not removed from the space via the outlet because it cannot cross the patch. Because the association between the outlet and the patch is stable at temperatures of at least 150°C , preferably at least 180°C, the association is not disrupted when devices according to the present invention are subjected to such temperatures, so that the devices may be used at temperatures of at least 150°C , preferably at least 180°C without failure of the association, and therefore without the possibility of curable matrix material being removed from the space formed by the envelope via the outlet.

Because the devices of the present invention may be used at temperatures of at least 150°C, and preferably at least 180°C, the fibre-reinforced composite components formed in the devices by the infusion of curable matrix material into the dry fibre components may also be cured at temperatures of at least 150°C, preferably at least 180°C, without being removed from the devices, allowing for the production of cured components that are particularly suitable for use in aerospace applications.

In a first preferred embodiment of the present invention, the patch is in the form of a sealed tube located within the space formed by the envelope, and the interior of the sealed tube is connected to a vacuum line passing through the patch and the envelope, so that when vacuum is applied to the vacuum line, gas but not curable matrix material present in the space is pulled from the space into the interior of the sealed tube and out of the device via the vacuum line.

In the devices of the first preferred embodiment, the sealed tube, sometimes referred to as a wrap, may be formed substantially solely from the patch. Alternatively, the sealed tube may be formed partly from the patch and partly from a material which is impermeable to both gas and curable matrix material. In this embodiment, the material which is impermeable to both gas and curable matrix material may be any conventional material, such as any of the materials that may be used to form the envelopes of devices according to the present invention; and the material used to form the sealed tube in combination with the patch may be the same or different to the material from which the envelope is formed in a particular device. In embodiments in which the sealed tube is formed partly from the patch and partly from a material which is both gas and curable matrix material impermeable, the patch preferably forms no more than 50% of the sealed tube.

In the devices of the first preferred embodiment of the invention, the sealed tube may optionally comprise additional components, such as breather material and a vacuum port connector.

The sealed tube may be formed in any conventional manner, for example by firstly forming a tube from a patch of gas permeable but curable matrix material impermeable membrane, which may be optionally combined with a material which is impermeable to both gas and curable matrix material, inserting any additional components into the tube, and sealing the ends of the tube to form a gas permeable but curable matrix material impermeable sealed tube. However, the seals used to form the sealed tube must be stable at temperatures of at least 150°C, and preferably at least 180°C. In a particularly preferred embodiment, the sealed tube is formed by thermosealing, i.e. preferably each seal used to form the sealed tube is formed by thermosealing.

Thermosealing is a conventional procedure for joining materials, particularly thermoplastic materials, and those skilled in the art will be able to identify suitable temperatures and pressures for sealing membranes which are permeable to gas but impermeable to curable matrix materials to themselves and to other materials.

The vacuum line connecting to the interior of a sealed tube according to this embodiment of the present invention may be any conventional means of reducing the pressure within a closed space. The vacuum line must pass through the patch forming the sealed tube and through the envelope of the device in a sealed manner, i.e. so that leaks are not introduced into the sealed tube or the envelope. This may be achieved in any conventional way, for example by connecting the vacuum line to a vacuum port contained within the sealed tube, and by creating a seal around the point at which the vacuum tube passes through the envelope.

In this embodiment, multiple sealed tubes may be included in a single device to provide multiple outlet points.

In a second preferred embodiment of the present invention, the patch is sealed to the envelope to form a second space within the space formed by the envelope, and the interior of the second space is connected to a vacuum line passing through the envelope, so that when vacuum is applied to the vacuum line, gas but not curable matrix material present in the space is pulled from the space into the second space and out of the device via the vacuum line.

In the devices of the second preferred embodiment of the invention, the patch is connected to the inside of the outer envelope forming a second space within the first space formed by the envelope, i.e. between the first space and the envelope. The second space is therefore effectively formed by two wall portions, i.e. a first wall portion forming a boundary between the first space and the second space and formed from the patch of gas permeable but curable matrix material impermeable membrane, and a second wall portion forming a boundary between the second space and the environment surrounding the device and formed from a portion of the gas and curable matrix material impermeable envelope.

The patch may be sealed to the envelope in any conventional manner, so long as the seal is stable at temperatures of at least 150°C, preferably at least 180°C. Suitably, the patch may be sealed to the envelope by one or more adhesive bands, which may be adhesive on one or both sides, such as adhesive bands coated with polytetrafluoroethylene (PTFE).

In the devices of the second preferred embodiment of the invention, the second space formed by the patch may optionally comprise additional components, such as breather material and a vacuum port connector.

The vacuum line connecting to the interior of the second space according to this embodiment of the present invention may be any conventional means of reducing the pressure within a closed space. In this embodiment, the vacuum line does not need to pass through the patch forming the second space, but must pass through the envelope of the device in a sealed manner, i.e. so that leaks are not introduced into the second space. This may be achieved in any conventional way, for example by connecting the vacuum line to a vacuum port contained within the second space, and by creating a seal around the point at which the vacuum tube passes through the envelope.

In this embodiment, multiple patches may be sealed to the envelope in a single device to provide multiple outlets.

In a third preferred embodiment of the present invention, the tool comprises a perforated section attached to a vacuum source, and the patch is sealed to the tool to entirely cover the perforated section to form a second space within the space formed by the envelope, so that when vacuum is applied to the perforated section, gas but not curable matrix material present in the space is pulled from the space into the second space and out of the device via the perforated section.

In the devices of the third preferred embodiment of the invention, the patch is connected to the tool so as form a second space within the first space formed by the envelope, i.e. between the first space and the perforated portion of the tool. The second space is therefore effectively formed by two wall portions, i.e. a first wall portion forming a boundary between the first space and the second space and formed from the patch of gas permeable but curable matrix material impermeable membrane, and a second, perforated, wall portion forming a permeable boundary between the second space and the vacuum source and formed from the perforated section of the tool.

The perforated section of the tool may be of any suitable size to allow sufficient gas removal from the first space. The perforated section may also comprise any size, number or combination of perforations suitable to allow sufficient gas removal from the first space; for example, only a single passage through the tool may be sufficient if it is of suitable size.

The patch may be sealed to the tool in any conventional manner, so long as the seal is stable at temperatures of at least 150°C, preferably at least 180°C. Suitably, the patch may be sealed to the tool by one or more adhesive bands, which may be adhesive on one or both sides, such as adhesive bands coated with polytetrafluoroethylene (PTFE).

In the devices of the third preferred embodiment of the invention, the second space formed by the patch may optionally comprise additional components, such as breather material.

The vacuum source attached to the perforated section of the tool and connecting to the interior of the second space according to this embodiment of the present invention may be any conventional means of reducing the pressure within a closed space, such as a vacuum line. In this embodiment, the vacuum line does not need to pass through the patch forming the second space nor through the envelope of the device.

In this embodiment, multiple perforated sections, each having an associated patch, may be included in a single device to provide multiple outlets, but in preferred embodiments only a single perforated section is present.

The devices of the present invention may optionally comprise additional components to improve curable matrix material infusion and/or processing and handling of the infused component. Such additional components may include flow mesh, which may be located, for example, between the dry fibre component and the tool and/or between the dry fibre component and the envelope; microperforated foil, which may be located, for example, between the dry fibre component and the tool or a flow mesh, if present; and peel ply, which may be located, for example, on one or more surfaces of the dry fibre component.

The methods of the present invention comprise arranging a dry fibre component on the tool of a device according to the present invention, and enclosing at least the surface of the tool comprising the dry fibre component in the envelope of the device to form a space above the dry fibre component and to isolate at least the surface of the tool on which the dry fibre component is arranged from the environment. This process is sometimes referred to as laying up. Once the dry fibre component and all additional components of the device have been laid up, the inlet of the device is attached to a source of curable matrix material, and a vacuum is applied to the outlet of the device so that gas is removed from the space formed by the envelope, and curable matrix material is drawn into the space from the source to contact the dry fibre component. Because of the association between the outlet and the patch formed from a membrane which is permeable to gas but impermeable to curable matrix material, gas is removed from the space via the outlet, but curable matrix material is not removed from the space. The inlet (or inlets) and outlet (or outlets) of the device are arranged during lay up so that, when the vacuum is applied, the curable matrix material penetrates the dry fibre component, preferably so that the dry fibre component is completely impregnated thereby.

The methods of the present invention preferably also include a step of curing the curable matrix material, once the dry fibre component is sufficiently impregnated; and preferably the curing is carried out without removing the impregnated fibre component from the device of the invention.

Curing is generally carried out by exposure to an externally applied temperature, and optionally elevated pressure. Heating may be carried out by any conventional means, for example in an oven or autoclave.

Because the association between the patches and the outlets of the devices of the present invention is stable at temperatures of at least 150°C, this temperature may be used for curing, and in preferred embodiments in which the association between the patches and the outlets of the devices of the present invention is stable at temperatures of at least 180°C, curing may be carried out at temperatures of 180°C, or even higher, without the need to remove the impregnated fibre components from the devices.

The devices and methods of the invention are suitable to produce fibre-reinforced components from dry fibre components. The dry fibre component is preferably formed substantially or completely from fibrous material, particularly fibrous reinforcement material, although additional components, such as fibrous or non-fibrous veils and/or toughener materials, may be included.

By a "dry" fibre component, it is meant that the component comprises at least one layer of fibre that is free from resin. However, additional layers may also be present, such as a layer pre-impregnated with a curable resin, a prepreg layer, and/or a layer of cured laminate.

The dry fibre component may comprise woven, non-crimped or unidirectional fabrics. The dry fibre component may be arranged on the tool by hand lay-up, automated fibre placement or by automated tape lay-up.

The dry fibre component may be in the form of a flat sheet or may be shaped to form a preform. The shaping may be carried out before arrangement of the component on the tool, during arrangement on the tool, or after arrangement on the tool, or any combination thereof. The fibrous reinforcement of the dry fibre component may be selected from hybrid or mixed fibre systems that comprise synthetic or natural fibres, or a combination thereof.

The fibrous reinforcement may comprise cracked (i.e. stretch-broken) or selectively discontinuous fibres, or continuous fibres. The fibrous reinforcement may be in the form of a woven, non-crimped, non-woven, unidirectional, or multi-axial textile structure. The woven form may be selected from a plain, satin, or twill weave style. The non-crimped and multi-axial forms may have a number of plies and fibre orientations. Such styles and forms are well known in the composite reinforcement field, and are commercially available from a number of companies, including Hexcel Reinforcements (Les Avenieres, France).

The reinforcement fibres can be selected from any of the following commercially available high performance fibres which may be used alone or in combination:-aramid (e.g. Kevlar™), glass, carbon, ceramic, hemp, or polyolefin. Carbon fibres are the preferred material, particularly standard or intermediate modulus fibres of between 3,000 to 24,000 filaments per fibre tow. The desirable reinforcement form is a woven or non-crimped textile structure of between 50 to 1,000 gm⁻² fibre areal weight, although materials of higher or lower areal weight may be used in some cases. Typical weave styles include plain, satin and twill weaves. Non-crimped or multiaxial reinforcements can have a number of plies and fibre orientations such as +45/-45; 0/+45/-45; 0/+45/-45/90; +60/-60; +30/-30; 0/+60/-60; 0/+30/- 30; 90/+60/-60; 90/+30/-30; +60/-60/+30/-30; etc. Such styles are well known in the composite reinforcement field and are available from a number of companies including Hexcel Reinforcements, Les Avenieres, France. Preferably the reinforcement fibres are arranged in a unidirectional fabric. The surface mass of fibres within the fibrous reinforcement is generally 80 to 4,000 g/m², preferably 100 to 2,500 g/m², and especially preferably 150 to 2,000 g/m². The number of carbon filaments per tow can vary from 3,000 to 320,000, again preferably from 6,000 to 160,000 and most preferably from 12,000 to 48,000. For fibreglass reinforcements, fibres of 600 to 2,400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used.

Upon curing, the infused fibre component becomes a composite part, suitable for use in a structural application, such as for example on an aerospace structure. Such composite laminates can comprise structural fibres at a level of from 80% to 15% by volume, preferably from 58% to 65% by volume.

In a preferred embodiment of the invention the curable matrix material comprises a thermosetting resin, preferably an epoxy resin. A wide variety of epoxy resins are suitable for use in the matrix of the present invention. Epoxy resins are organic materials having an average of at least 1.5, generally at least 2, reactive 1,2-epoxy groups per molecule. These epoxy resins can have an average of up to 6, preferably up to 4, most preferably up to 3, reactive 1,2-epoxy groups per molecule. These epoxy resins can be monomeric or polymeric, saturated or unsaturated, aliphatic, cyclo-aliphatic, aromatic or heterocyclic and may be substituted, if desired, with other substituents in addition to the epoxy groups, e.g. hydroxyl groups, alkoxy groups or halogen atoms.

Suitable examples include epoxy resins from the reaction of polyphenols and epihalohydrins, poly alcohols and epihalohydrins, amines and epihalohydrins, sulfur- containing compounds and epihalohydrins, polycarboxylic acids and epihalohydrins, polyisocyanates and 2,3 - epoxy- 1-propanol (glycidyl) and from epoxidation of olefinically unsaturated compounds.

Preferred epoxy resins are the reaction products of polyphenols and epihalohydrins, of polyalcohols and epihalohydrins or of polycarboxylic acids and epihalohydrins. Mixtures of polyphenols, polyalcohols, amines, sulfur-containing compounds, polycarboxylic acids and/or polyisocyanates can also be reacted with epihalohydrins. Illustrative examples of epoxy resins useful herein are described in The Handbook of Epoxy Resins by H. Lee and K. Neville, published in 1967 by McGraw- Hill, New York, in appendix 4-1, pages 4-56, which is incorporated herein by reference.

For bisphenol-A type epoxy resin the average epoxy equivalent weight is advantageously from about 170 up to about 3000, preferably from about 170 up to about 1500. The average epoxy equivalent weight is the average molecular weight of the resin divided by the number of epoxy groups per molecule. The molecular weight is a weight average molecular weight.

The preferred thermoset matrices for the methods of the present invention are epoxy or bismaleimide (BMI) with suitable epoxy examples being HexFlow® RTM 6 or RTM 120. A typical BMI matrix is HexFlow® RTM 651. HexFlow® VRM 34 may be used for Vacuum-assisted Resin Transfer Moulding (VaRTM) applications. All of the above materials are available from Hexcel Composites SAS, Dagneux, France.

Preferred examples of epoxy resins particularly suitable for use with pre-impregnated reinforcement materials are those having an average epoxy equivalent weight of from about 170 to about 200. Such resins are commercially available from The Dow Chemical Company, as D.E.R. 330, D.E.R. 331 and D.E.R. 332 epoxy resins. Further preferred examples are resins with higher epoxide equivalent weight, such as D.E.R. 667, D.E.R. 669 and D.E.R. 732, all of which are commercially available from The Dow Chemical Company, or Araldite MY0500, MY0150, MY0600, MY0610, MY721 from Huntsman.

Another class of polymeric epoxy resins which can be used in the resin matrix includes the epoxy novolac resins. The epoxy novolac resins can be obtained by reacting, preferably in the presence of a basic catalyst, e.g. sodium or potassium hydroxide, an epihalohydrin, such as epichlorohydrin, with the resinous condensate of an aldehyde, e.g. formaldehyde, and either a monohydric phenol, e.g. phenol itself, or a polyhydric phenol. Further details concerning the nature and preparation of these epoxy novolac resins can be obtained in Lee, H. and Neville, K. Handbook of Epoxy Resins, McGraw Hill Book Co. New York, 1967. Other useful epoxy novolac resins include those commercially available from The Dow Chemical Company as D.E.N. 431, D.E.N. 438 and D.E.N. 439 resins, respectively.

In alternative embodiments any resin from the following classes may also be used as the thermoset resin: benzoxazine resins, vinyl ester resins, unsaturated polyester resins, urethane resins, phenol resins, melamine resins, maleimide resins, cyanate resins and urea resins.

A variety of amine curing agents can be used in the curable matrix material. The amine curing agents which may be employed are primarily the multifunctional, preferably di- to hexafunctional, and particularly di- to tetrafunctional primary amines. Examples of such amine curing agents include, but are not limited to, isophorone diamine (IPDA), ethylene diamine, diaminodiphenylsulfones, tetraethyl amine, 2, 4-diaminotoluene (DAT) diamines and dicyandiamide (DICY). Mixtures of two or more of the amine curing agents can also be used. Also modified hardeners where amines are reacted in vast excess with epoxy resin are good candidates as amine curing agents. Any curing agent suitable for use as a reactant for the reactive cross-linked thermoset coating is suitable for use in the curable matrix material.

The curable matrix material may also comprise an accelerator. Such accelerators are known in the art. Suitable accelerators are, for example, amines, preferably ethylene diamine, diethylene triamine, dicyandiamide, triethylene tetraamine, aminoethyl piperazine, organic acids, e.g. dicarboxylic acids, phenol compounds, imidazole and its derivatives, urea based curing agents e.g. those under the commercial name Urone®, and calcium nitrate.

The conditions required for impregnating the dry fibre components will depend upon many factors, including the nature and size of the component, the composition and viscosity of the curable matrix material, and the degree of impregnation required. Those skilled in the art will be able to identify suitable conditions, such as temperature, pressure and time of infusion.

### BRIEF DESCRIPTION OF THE DRAWINGS

The invention will now be clarified by way of example only and with reference to the following Figures and Examples in which:
Figure 1 is a schematic drawing of a device according to a first embodiment of the present invention including a preform;
Figure 2 is a schematic drawing of a wrap for use in a device according to a first embodiment of the present invention and its process of preparation;
Figure 3 is a schematic drawing of a device according to a second embodiment of the present invention including a preform; and
Figure 4 is a schematic drawing of a device according to a third embodiment of the present invention including a preform.

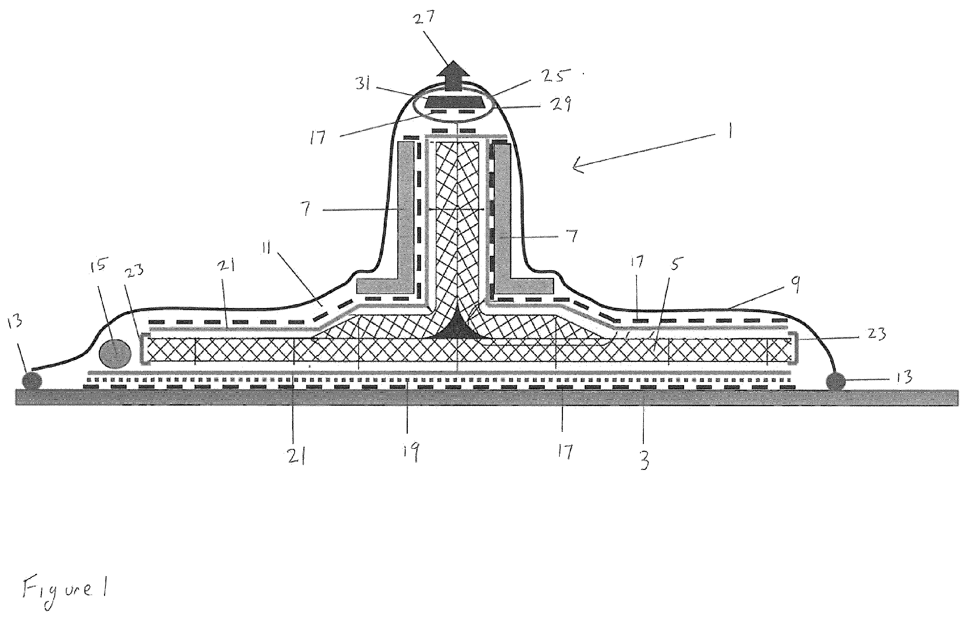

Figure 1 shows a device 1 according to a first preferred embodiment of the present invention. The device 1 includes a tool 3 for supporting a dry fibre component 5 for infusion with a curable matrix material.

The dry fibre component 5 is in the form of a preform, and the device includes additional shaping components 7 to further shape and/or maintain the original shape of the preform during matrix material infusion. The dry fibre component 3 is further secured by one or more adhesive bands 23.

The outer surface of the device 1 is formed from a vacuum foil or bag 9 which is impermeable to gas and curable matrix material. The vacuum foil 9 is sealed to the tool 3 to form a space 11 surrounding the dry fibre component 5 and to isolate the dry fibre component 5 from the surrounding environment. The seal 13 between the tool 3 and the vacuum foil 9 is sufficient to prevent the passage of gas or curable matrix material through the join and is stable at all temperatures to which the device will be subjected in normal use.

The device 1 further comprises an inlet 15 which passes through the vacuum foil 9 and is connected to a source of curable matrix material (not shown).

The device 1 further includes layers of flow mesh 17 positioned between the dry fibre component 5 and the tool 3, the additional shaping components 7 and the vacuum foil 13. A layer of microperforated foil 19 is also present between the dry fibre component 5 and the layer of flow mesh 17 adjacent to the tool 3. Layers of peel ply 21 are also present on the upper and lower surfaces of the dry fibre component 5.

The device 1 further comprises a wrap 25 positioned above the dry fibre component 3 and forming an outlet 27 in the device 1. The wrap 25 is formed as a sealed tube of a gas permeable but curable matrix material impermeable membrane 29. The wrap 25 encloses a breather material 31 and may also enclose a layer of flow mesh 17.

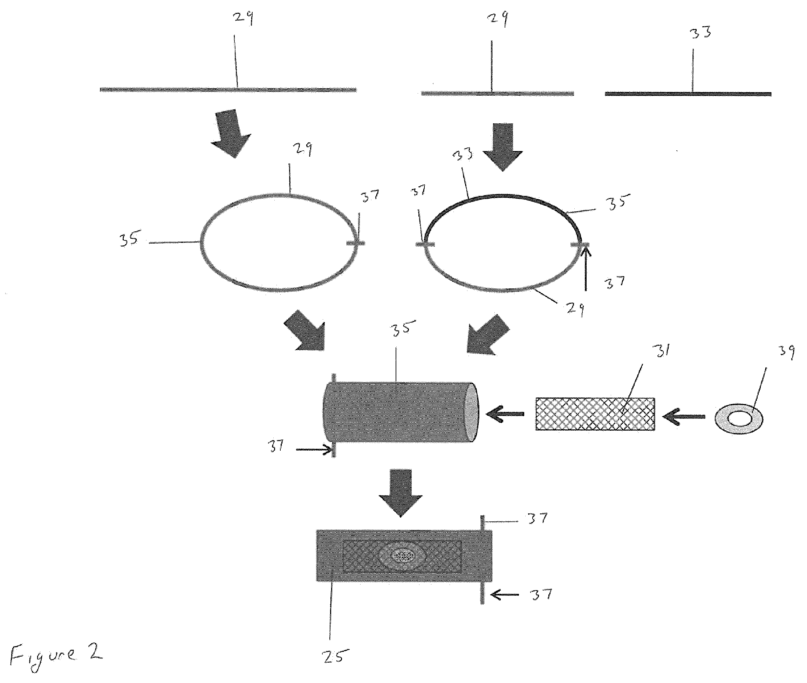

As illustrated in Figure 2, the wrap 25 of the device 1 may be formed either from a single piece of gas permeable but curable matrix material impermeable membrane 29 or from a section of gas permeable but curable matrix material impermeable membrane 29 and a section of gas and curable matrix material impermeable material 33. These materials are initially formed into a hollow tube 35 by seals 37, and breather material 31 and a vacuum port 39 are inserted into the hollow tube 35. The ends of the hollow tube 35 are then further sealed 37 to form a fully sealed wrap 25. The seals 37 are all stable at temperatures of at least 180°C, and may be formed, for example, by thermoforming at suitable temperatures.

In use, the vacuum port 39 of the wrap 25 present in the device 1 is connected to a vacuum line (not shown) which is passed through the vacuum foil 9 and the wrap 25 and sealed thereto. Vacuum applied to the vacuum port 39 from the vacuum line causes gas to be pulled from the wrap 25 and therefore for gas to be pulled from the space 11 into the wrap 25 (and subsequently out of the wrap 25). The removal of gas from the space 11 causes curable matrix material to be pulled into the space 11 and to impregnate the dry fibre component 5. The curable matrix material is held within the space 11 by the vacuum foil 9 and does not penetrate the wrap 25, so that there is no loss of curable matrix material via the vacuum line.

Once the dry fibre component 5 is sufficiently impregnated with curable matrix material the inlet 15 and the outlet 27 may be closed to prevent further flow of curable matrix material, and the impregnated fibre component 5 may be cured without removal from the device 1 at temperatures of 180°C or greater.

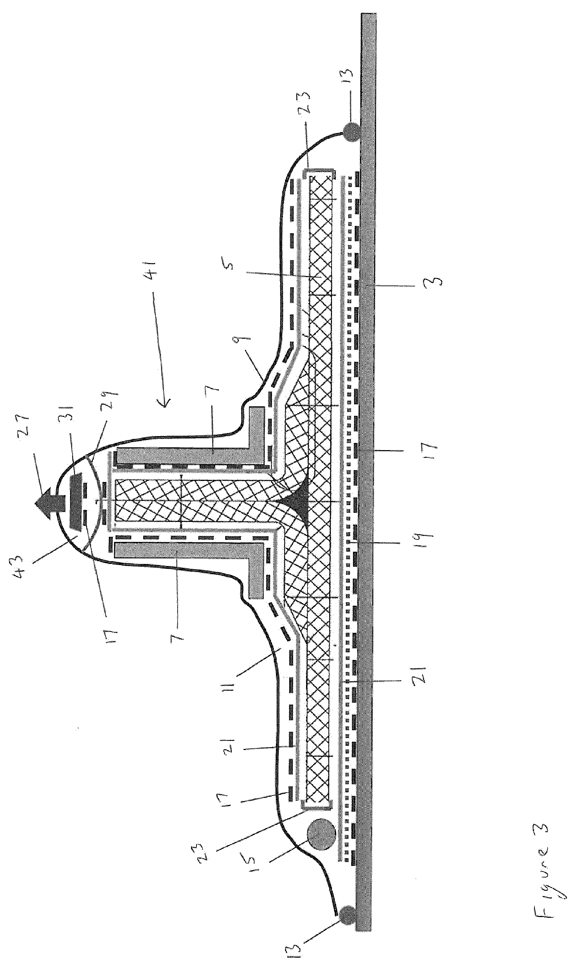

Figure 3 shows a device 41 according to a second preferred embodiment of the present invention.

The device 41 shown in Figure 3 comprises many of the same components as the device 1 shown in Figure 1 (which are numbered in the same manner). However, in the device 41 shown in Figure 3 there is no wrap 25, and the outlet 27 is formed by a portion of gas permeable but curable matrix material impermeable membrane 29 attached to the vacuum foil 9 to form a second space 43 between the first space 11 and the vacuum foil 9. The gas permeable but curable matrix material impermeable membrane 29 is sealed to the vacuum foil 9 in an suitable manner to ensure that the seal is stable at temperatures of 180°C or higher, for example by one or more high temperature adhesive bands (not shown) coated with PTFE.

The second space 43 contains breather material 31 and optionally a flow mesh 17 together with a vacuum port (not shown).

In use, the second space 43 of the device 41 is attached to a vacuum source (not shown) and operates in the same manner as the wrap 25 of the device 1 shown in Figure 1. Thus, the vacuum port of the second space 43 is attached to a vacuum line (not shown) which is passed through the vacuum foil 9 and sealed thereto. Vacuum applied to the vacuum port from the vacuum line causes gas to be pulled from the second space 43, and therefore for gas to be pulled from the first space 11 into the second space 43 (and subsequently out of the second space 43). The removal of gas from the first space 11 causes curable matrix material to be pulled into the first space 11 and to impregnate the dry fibre component 5. The curable matrix material is held within the space 11 by the vacuum foil 9 and does not penetrate the second space 43, so that there is no loss of curable matrix material via the vacuum line.

Once the dry fibre component 5 is sufficiently impregnated with curable matrix material the inlet 15 and the outlet 27 may be closed to prevent further flow of curable matrix material, and the impregnated fibre component 5 may be cured without removal from the device 1 at temperatures of 180°C or greater.

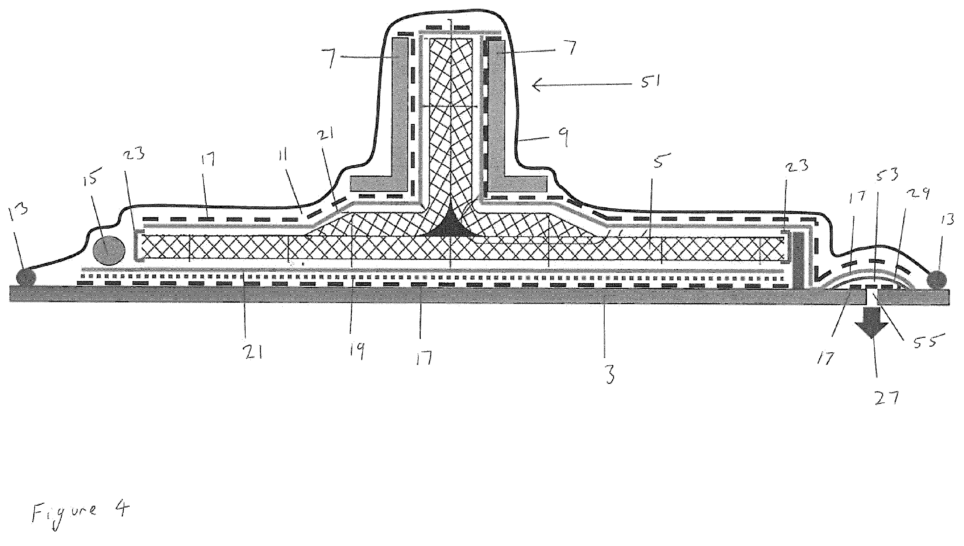

Figure 4 shows a device 51 according to a third preferred embodiment of the present invention.

The device 51 shown in Figure 4 comprises many of the same components as the device 1 shown in Figure 1 (which are numbered in the same manner). However, in the device 51 shown in Figure 4 there is no wrap 25, and the outlet 27 is formed by a perforated section 55 of the tool 3, which is covered by a gas permeable but curable matrix material impermeable membrane 29 to form a second space 53 between the first space 11 and the perforated section 55 of the tool 3. The gas permeable but curable matrix material impermeable membrane 29 is sealed to the perforated section 55 of the tool 3 in an suitable manner to ensure that the seal is stable at temperatures of 180°C or higher, for example by one or more high temperature adhesive bands (not shown) coated with PTFE.

In use, the second space 53 of the device 51 is attached to a vacuum source (not shown) and operates in the same manner as the wrap 25 of the device 1 shown in Figure 1. Thus, the perforated section 55 of the tool 3 is attached to a vacuum line (not shown), and vacuum applied to the vacuum port from the vacuum line causes gas to be pulled from the second space 53, and therefore for gas to be pulled from the first space 11 into the second space 53 (and subsequently out of the second space 53). The removal of gas from the first space 11 causes curable matrix material to be pulled into the first space 11 and to impregnate the dry fibre component 5. The curable matrix material is held within the space 11 by the vacuum foil 9 and does not penetrate the second space 53, so that there is no loss of curable matrix material via the vacuum line.

Once the dry fibre component 5 is sufficiently impregnated with curable matrix material the inlet 15 and the outlet 27 may be closed to prevent further flow of curable matrix material, and the impregnated fibre component 5 may be cured without removal from the device 1 at temperatures of 180°C or greater.

### EXAMPLES

HiTape® material (as supplied by Hexcel Reinforcements, Les Avenieres) was deposited in multiple layers to form dry fibre components for infusion testing in devices according to the present invention. HiTape® is a dry tape which comprises unidirectional carbon fibre tows having thermoplastic veils on either side of the tows to facilitate heat bonding of the tape during lay-up.

The dry fibre components were shaped and laid up in devices corresponding to the devices shown in Figures 1, 3 and 4. In each device the patch of gas permeable but curable matrix material impermeable membrane was formed from a C2003 A-Laminate VAP membrane available from Trans-Textil GmbH. In the first device the gas permeable but curable matrix material impermeable membrane was formed into a wrap by thermoforming at a temperature of 200°C. In the second device the gas permeable but curable matrix material impermeable membrane was attached to the vacuum foil by single sided adhesive bands coated with PTFE. In the third device the gas permeable but curable matrix material impermeable membrane was attached to the perforated section of the tool by single sided adhesive bands coated with PTFE.

The assemblies were then infused with HexFlow® RTM 6 (available from Hexcel Composites SAS) and cured at a temperature of 180°C according to the recommended cure schedule of RTM 6. In each case, the parts were fully infused, with a final fibre volume content of approximately 60%, and no leaks were found in the gas permeable but curable matrix material impermeable membrane or between the component(s) it was attached to.

## Claims

1. A device for producing fibre-reinforced composite components from dry fibre components by means of an injection process for injecting curable matrix material, comprising
a. a tool for arranging a dry fibre component;
b. an envelope which is impermeable to gas and curable matrix material arranged on at least one side of the tool to form a space into which curable matrix material may be introduced to contact a dry fibre component arranged on the tool, the envelope sealing off the tool from the environment;
c. an inlet for introducing curable matrix material into the space formed by the envelope;
d. an outlet for removing gas from the space formed by the envelope so that curable matrix material may be drawn into the space to penetrate the dry fibre component arranged on the tool; and
e. a patch formed from a membrane which is permeable to gas but impermeable to curable matrix material, the patch being associated with the outlet so that gas, but not curable matrix material, can be removed from the space formed by the envelope via the outlet; wherein the association between the outlet and the patch is stable at temperatures of at least 150°C.

2. A device according to claim 1 comprising more than one outlet, each outlet being associated with a patch formed from a membrane which is permeable to gas but impermeable to curable matrix material, so that gas, but not curable matrix material, can be removed from the space formed by the envelope via the outlets; wherein the association between each outlet and patch is stable at temperatures of at least 150°C.

3. A device according to claim 1 or claim 2, wherein the association between the outlet and the patch is stable at temperatures of at least 180°C.

4. A device according to any preceding claim 1, wherein the total area of the membrane forming the patch is less than 50% of the total area of the envelope, preferably less than 20%, more preferably less than 10%.

5. A device according to any preceding claim, wherein the patch is in the form of a sealed tube located within the space formed by the envelope, and the interior of the sealed tube is connected to a vacuum line passing through the patch and the envelope, so that when vacuum is applied to the vacuum line, gas but not curable matrix material present in the space is pulled from the space into the interior of the sealed tube and out of the device via the vacuum line.

6. A device according to claim 5, wherein the sealed tube is formed substantially solely from the patch.

7. A device according to claim 5, wherein the sealed tube is formed partly from the patch and partly from a material which is impermeable to both gas and curable matrix material.

8. A device according to any of claims 5 to 7, wherein the sealed tube is formed by thermosealing.

9. A device according to any of claims 1 to 4, wherein the patch is sealed to the envelope to form a second space within the space formed by the envelope, and the interior of the second space is connected to a vacuum line passing through the envelope, so that when vacuum is applied to the vacuum line, gas but not curable matrix material present in the space is pulled from the space into the second space and out of the device via the vacuum line.

10. A device according to claim 9, wherein the patch is sealed to the envelope by means of one or more adhesive bands.

11. A device according to any of claims 1 to 4, wherein the tool comprises a perforated section attached to a vacuum source, and the patch is sealed to the tool to entirely cover the perforated section to form a second space within the space formed by the envelope, so that when vacuum is applied to the perforated section, gas but not curable matrix material present in the space is pulled from the space into the second space and out of the device via the perforated section.

12. A device according to claim 11, wherein the patch is sealed to the tool by means of one or more adhesive bands.

13. A method for producing fibre-reinforced composite components by use of a device according to any of the preceding claims, comprising
a. arranging a dry fibre component on the tool of the device;
b. arranging the envelope of the device to isolate the tool and the dry fibre component from the environment and to form a space into which curable matrix material may be introduced to contact the dry fibre component;
c. attaching the inlet of the device to a source of curable matrix material; and
d. applying vacuum to the outlet of the device, so that gas is removed from the space formed by the envelope and curable matrix material is drawn into the space and penetrates the dry fibre component, but so that curable matrix material is not removed from the space.

14. A method according to claim 13, further including the step of curing the curable matrix material, preferably wherein the curing temperature is at least 150°C, more preferably at least 180°C.

15. A method according to claim 13 or claim 14, wherein the curable matrix material comprises an epoxy resin.
